# EUROPEAN PATENT APPLICATION

(11) **EP 2 626 971 A1**
(43) Date of publication of application: **14.08.2013**
(21) Application number: 12837368.5
(22) Date of filing: 27.09.2012
(51) Int. Cl.: H02J 7/34, H01M 8/00, H01M 8/04, H01M 10/44, H01M 10/48, H02J 3/38

(54) **POWER SUPPLY SYSTEM AND METHOD FOR CONTROLLING SAME**

(30) Priority: 29.09.2011 JP 2011213962
(71) Applicant: Panasonic Corporation, Osaka 571-8501 (JP)
(72) Inventor: FUJIKAWA, Takaaki, Osaka 540-6207 (JP); KAKU, Hiroaki, Osaka 540-6207 (JP); KATOU, Motomichi, Osaka 540-6207 (JP)
(74) Representative: Grünecker, Kinkeldey, Stockmair & Schwanhäusser
(86) International application number: PCT/JP2012/006176
(87) International publication number: WO 2013/046684

(57) **Abstract**

A power supply system including: a power storage device (104) which is connected to a system power supply (101) and is chargeable and dischargeable; a second load (103) which is connected in parallel to the power storage device (104); a power generation device (105) which is connected to the second load (103), generates power, supplies the generated power to the second load (103), and performs a shutdown process for stopping power generation using power supplied from the power storage device (104); and a determination device (108) which determines whether or not a remaining amount of power in the power storage device (104) is greater than a shutdown power amount which is an amount of power necessary for the power generation device (105) to perform the shutdown process, in which the power generation device (105) performs, while in operation, the shutdown process or supplying of power to the power storage device (104) according to the determination by the determination device (108).

## Description

### [Technical Field]

The present invention relates to a power supply system including a power generation device which performs a shutdown process for stopping power generation using power supplied from a power storage device, and a method of controlling the same.

### [Background Art]

As a conventional power supply system including a power storage device, a fuel-cell cogeneration system with a configuration such as shown in FIG. 6 is disclosed (see, Patent literature (PTL) 1 for example).

The following describes a power supply system in FIG. 6 disclosed in PTL 1. The power supply system shown in FIG. 6 includes a system power supply 01 which includes a utility power source, a fuel cell system 02 which includes a fuel cell, a power storage device 04 which includes a storage cell, a general load 03 which is disposed between the fuel cell system 02 and the system power supply, a dummy load 10 which receives surplus power from the fuel cell system 02, contact switches 06, 07, 08, and 09, and a controller 05 which controls ON/OFF state for each of the contact switches.

The fuel cell system 02 includes a fuel cell 11 which generates DC power, a power conditioner 13 which converts the DC power from the fuel cell 11 into AC power and supplies the AC power to the general load 03, and an auxiliary machine 12 which performs an operation needed to activate the fuel cell 11 using power from the system power supply 01.

The power conditioner 13 in the fuel cell system 02 can control distribution of the surplus power by operating the fuel cell 11 in association with the system power supply 01. The power supply system further includes a power interruption detection unit which detects power interruption from the system power supply 01. When the power storage device 04 and the power interruption detection unit detect the power interruption from the system power supply 01, the power supply system changes the power source from the system power supply 01 to the power storage device 04 to supply AC power from the power storage device 04 to the auxiliary machine 12. The power supply system also includes a control unit which can control the distribution of the surplus power by starting an operation of the fuel cell 11 in association with the power storage device 04 when power is supplied to the auxiliary 12.

In particular, the power storage device 04 includes a storage cell 16 in which DC power is stored, and a power conditioner for power storage device 15 which converts the DC power from the storage cell 16 into AC power. The storage cell 16 and the power conditioner for power storage device 15 are activated by an instruction from the control unit, and AC power is supplied from the power conditioner for power storage device 15 to the auxiliary machine 12 through the second contact switch 07 which is closed by the controller 05.

When the system power supply 01 is in normal operation, the conventional power supply system with the above-mentioned configuration supplies power to the general load 03 from the fuel cell 11 interconnected with the system power supply 01 in addition to the power from the system power supply 01, and stores DC power in the storage cell 16 by converting, in the power conditioner for power storage device 15, AC power received through the second contact switch 07 into the DC power.

On the other hand, even when the power from the system power supply 01 is interrupted, the fuel cell 11 can continue the operation. It is because the controller 05 changes the power source from the system power supply 01 to the power storage device 04 so as to supply AC power to the auxiliary machine 12.

### [Citation List]

### [Patent Literature]

[PTL 1] Japanese Unexamined Patent Application Publication No. 2007-242528

### [Summary of Invention]

### [Technical Problem]

However, in such a conventional power supply system, when power from a system power supply is interrupted, a possible time period when power could be supplied from a power storage device to a power generation device such as a fuel cell system depends on a remaining amount of power stored in the power storage device, power generated by the power generation device, and power consumption of a general load and an auxiliary machine in the power generation device. For this reason, when a time period needed to restore the power from the system power supply is longer than the possible time period, the power from the power storage device to the power generation device is to be stopped. In this case, the conventional system has a problem that the power generation device fails to perform a normal shutdown process due to a loss of power in the power generation device, and thus components in the power generation device are deteriorated by the overload and the lives of the components are shortened.

The present invention was conceived in order to solve such a problem of the conventional system, and has an object to provide a power supply system and the like which allows the power needed to shut down the power generation device to be stored in the power storage device at any time.

### [Solution to Problem]

In order to solve the above problem, one embodiment of the power supply system according to the present invention is a power supply system including: a power storage device which is connected to a system power supply and is chargeable and dischargeable; a load which is connected in parallel to the power storage device; a power generation device which is connected to the load, generates power, supplies the generated power to the load, and performs a shutdown process for stopping power generation using power supplied from the power storage device; and a determination device which determines whether or not a remaining amount of power in the power storage device is greater than a shutdown power amount which is an amount of power necessary for the power generation device to perform the shutdown process, in which the power generation device performs, while in operation, the shutdown process or supplying of power to the power storage device according to the determination by the determination device.

Furthermore, in order to solve the above problem, one embodiment of a method of controlling the power supply system according to the present invention is a method of controlling a power supply system which includes: a power storage device which is connected to a system power supply and is chargeable and dischargeable; a load which is connected in parallel to the power storage device; and a power generation device which is connected to the load, generates power, supplies the generated power to the load, and performs a shutdown process for stopping power generation using power supplied from the power storage device, the method including: determining whether or not a remaining amount of power in the power storage device is greater than a shutdown power amount which is an amount of power necessary for the power generation device to perform the shutdown process, and performing the shutdown process or supplying of power to the power storage device according to the determination in the determining, while the power generation device is in operation.

It should be noted that the present invention can be implemented not only as the power supply system and the method of controlling the same as described above, but also as: a program in which the control method is described in a computer language; a computer readable recording medium having the program recorded thereon; a control device including a processor which executes the control method; and a semiconductor integrated circuit including a dedicated electronic circuit which executes the control method.

### [Advantageous Effects of Invention]

In accordance with the present invention, a power supply system which allows the power needed to shutdown a power generation device to be stored in a power storage device at any time can be implemented.

This prevents the power generation device from being shut down incompletely due to a lack of power supplied from the power storage device.

### [Brief Description of Drawings]

[Fig. 1] FIG. 1 illustrates a block diagram showing the power supply system according to an embodiment 1 of the present invention.
[Fig. 2] FIG. 2 illustrates a flow chart showing the process of the power supply system according to the embodiment 1 of the present invention.
[Fig. 3] FIG. 3 illustrates a block diagram showing a power supply system according to an embodiment 2 of the present invention.
[Fig. 4] FIG. 4 illustrates a flow chart showing the process of the power supply system according to the embodiment 2 of the present invention.
[Fig. 5] FIG. 5 illustrates a flow chart showing a process of a power supply system according to an embodiment 3 of the present invention.

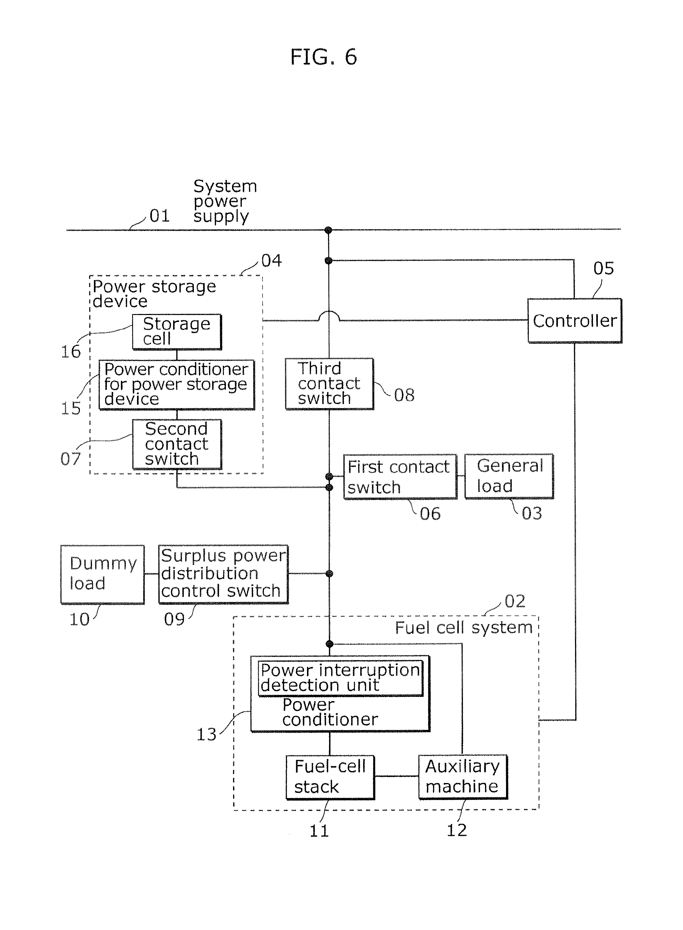

[Fig. 6] FIG. 6 illustrates a block diagram showing a conventional power supply system.

### [Description of Embodiments]

In order to achieve the above object, one embodiment of a power supply system according to the present invention is a power supply system including: a power storage device which is connected to a system power supply and is chargeable and dischargeable; a load which is connected in parallel to the power storage device; a power generation device which is connected to the load, generates power, supplies the generated power to the load, and performs a shutdown process for stopping power generation using power supplied from the power storage device; and a determination device which determines whether or not a remaining amount of power in the power storage device is greater than a shutdown power amount which is an amount of power necessary for the power generation device to perform the shutdown process, in which the power generation device performs, while in operation, the shutdown process or supplying of power to the power storage device according to the determination by the determination device. With this, it is ensured that the power needed to shut down the power generation device is stored in the power storage device at any time because the power generation device performs, while in operation, the shutdown process or supplying of power to the power storage device according to the determination by the determination device. Accordingly, in case of power interruption or the like, this prevents the power generation device from being shut down incompletely due to a lack of power supplied from the power storage device, and thus avoids the deterioration of components in the power generation device.

Here, in the power supply system, the determination device determines, in the determination, whether or not the remaining amount of power in the power storage device has decreased to the shutdown power amount, and when the determination device determines that the remaining amount of power in the power storage device has decreased to the shutdown power amount, the power generation device may perform the shutdown process while in operation. With this, in the case where the power generation device is shut down using only power supplied from the power storage device, the shutdown process of the power generation device is performed when the remaining amount of power in the power storage device has decreased to the amount of power needed to shut down the power generation device, so that the power generation device can perform, while in operation, the shutdown process completely, before the power from the power storage device is interrupted.

In addition, the power supply system may further include a switch which allows or interrupts power supply from the power storage device to the load, in which when the power generation device performs the shutdown process, the switch may interrupt the power supply from the power storage device to the load. With this, power supplied from the power storage device to the load is stopped during the shutdown process, so that it is ensured that power is supplied from the power storage device to the power generation device and thus the power generation device can perform, while in operation, the shutdown process completely, before the power from the power storage device is interrupted.

In addition, in the power supply system, the power storage device may include a plurality of storage batteries, and when the determination device determines that a total remaining amount of power in the storage batteries has decreased to the shutdown power amount, the power generation device may perform the shutdown process. With this, in the case where the power generation device is shut down using power supplied from the storage batteries, the shutdown process of the power generation device is performed when the total remaining amount of power in the storage batteries has decreased to the amount of power needed to shut down the power generation device, so that the power generation device can perform, while in operation, the shutdown process completely, before the power from the power storage device is interrupted.

In addition, in the power supply system, when the determination device determines that the remaining amount of power in the power storage device is not greater than the shutdown power amount during power generation in the power generation device, the power generation device may supply power to the power storage device until the remaining amount of power in the power storage device exceeds the shutdown power amount. With this, at any time during power generation in the power generation device, the remaining amount of power in the power storage device is greater than the amount of power needed to shut down, so that the power generation device can continue to generate power while keeping the remaining amount of power in the power storage device so as to be able to perform the shutdown process completely.

In addition, the power supply system may further include a switch which allows or interrupts power supply from the power storage device to the load, in which when the power generation device performs the shutdown process, the switch may interrupt the power supply from the power storage device to the load. With this, power supplied from the power storage device to the load is stopped during the shutdown process, so that it is ensured that power is supplied from the power generation device to the power storage device and thus the remaining amount of power in the power storage device can increases effectively.

In addition, in the power supply system, the power storage device may include a plurality of storage batteries, and when the determination device determines that a total remaining amount of power in the storage batteries is not greater than the shutdown power amount, the power generation device may supply power to the power storage device until the remaining amount of power in the power storage device exceeds the shutdown power amount. With this, at any time during power generation in the power generation device, the total remaining amount of power in power storage devices is greater than the amount of power needed to shut down, so that the power generation device can continue to generate power while keeping the total remaining amount of power in the power storage devices so as to be able to perform the shutdown process completely.

In addition, in the power supply system, the remaining amount of power may be an amount of power obtained by subtracting an amount of power to prevent over-discharge of the power storage device from an amount of power stored in the power storage device. With this, the remaining amount of power is a value which takes into account the amount of power to prevent the over-discharge of the power storage device, so that the deterioration of the storage battery caused by the over-discharge can be reduced in the shutdown process of the power generation device.

In addition, in the power supply system, when the power generation device includes a fuel cell, the shutdown power amount may be determined from a temperature of a reformer in the fuel cell. With this, the power supply system according to the present invention takes into account an amount of power necessary for a pressure applying step and a cooling step of the reformer which are required in the shutdown process of the fuel cell, thereby preventing the power generation device from being shut down incompletely due to a lack of power supplied from the power storage device.

In addition, in order to achieve the above object, one embodiment of a method of controlling the power supply system according to the present invention is a method of controlling a power supply system which includes: a power storage device which is connected to a system power supply and is chargeable and dischargeable; a load which is connected in parallel to the power storage device; and a power generation device which is connected to the load, generates power, supplies the generated power to the load, and performs a shutdown process for stopping power generation using power supplied from the power storage device, the method including: determining whether or not a remaining amount of power in the power storage device is greater than a shutdown power amount which is an amount of power necessary for the power generation device to perform the shutdown process, and performing the shutdown process or supplying of power to the power storage device according to the determination in the determining, while the power generation device is in operation.

More specifically, in the performing, the shutdown process is performed by the power generation device when it is determined in the determining that the remaining amount of power in the power storage device has decreased to the shutdown power amount, and the supplying of power to the power storage device is performed by the power generation device until the remaining amount of power in the power storage device exceeds the shutdown power amount when it is determined in the determining that the remaining amount of power in the power storage device is not greater than the shutdown power amount.

With this, (i) the power generation device performs the shutdown process when it is determined that the remaining amount of power in the power storage device has decreased to the shutdown power amount or (ii) the power generation device supplies power to the power storage device until the remaining amount of power in the power storage device exceeds the shutdown power amount when it is determined that the remaining amount of power in the power storage device is not greater than the shutdown power amount, so that it is ensured that the power needed to shut down the power generation device is stored in the power storage device at any time. Accordingly, in case of power interruption or the like, this prevents the power generation device from being shut down incompletely due to a lack of power supplied from the power storage device, and thus avoids the deterioration of components in the power generation device.

The following describes in detail the power supply system and the method of controlling the same according to the present invention with reference to the drawings. It should be noted that each of embodiments described below is a specific example of the present invention. The numerical values, shapes, constituent elements, the arrangement and connection of the constituent elements, steps, the processing order of the steps etc. shown in the following embodiments are mere examples, and thus do not limit the present invention. Thus, among the constituent elements in the following embodiments, constituent elements not recited in any of the independent claims indicating the most generic concept of the present invention are described as preferable constituent elements.

### (Embodiment 1)

The following describes in detail the power supply system according to an embodiment 1 of the present invention. It should be noted that the present invention is not limited to this embodiment.

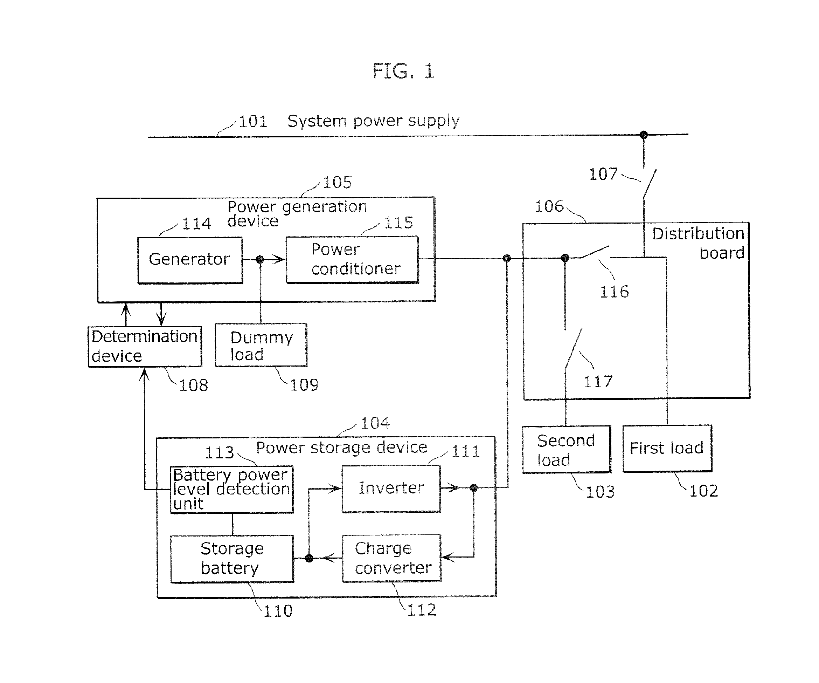

FIG. 1 illustrates a block diagram showing the power supply system according to the embodiment 1 of the present invention. As shown in FIG. 1, the power supply system includes a first load 102, a second load 103, a power storage device 104, a power generation device 105, a distribution board 106, a circuit breaker 107, a determination device 108, and a dummy load 109. It should be noted that a system power supply 101 is also illustrated in FIG. 1.

The system power supply 101 is a single-phase three-wire or three-phase three-wire AC power supply, and supplies power to the first load 102.

The first load 102 is a general load plugged into a standard socket (not shown), such as a television or an air conditioner, and is also an apparatus that consumes AC power supplied from the system power supply 101, the power storage device 104, and the power generation device 105 when the system power supply 101 is in normal operation. The second load 103 is an independent load plugged into a socket for independent operation (not shown), and is also an apparatus that consumes AC power supplied from the power storage device 104 and the power generation device 105 when the power from the system power supply 101 is interrupted. However, the first load 102 and the second load 103 are just examples of the load which is connected in parallel to the power storage device 104.

The power storage device 104 which is a chargeable and dischargeable capacitor is connected to the system power supply 101 through the circuit breaker 107 and a first switch 116, and includes the storage battery 110, an inverter 111, a charge converter 112, and a battery power level detection unit 113. The storage battery 110, which is a secondary battery such as a lithium-ion battery or a lead battery, can store power supplied from the system power supply 101 and/or the power generation device 105 and discharge the stored power. The inverter 111 converts DC power supplied from the storage battery 110 into AC power, and supplies the AC power to the first load 102 or the second load 103. In addition, when the power from the system power supply 101 is interrupted, the inverter 111 generates reference AC power with reference to which a frequency or phase of AC power to be generated by the power generation device 105 is determined. The charge converter 112 converts AC power supplied from the system power supply 101 and the power generation device 105 into DC power to charge the storage battery 110. The battery power level detection unit 113 detects a remaining amount of power in the storage battery 110 (remaining power level of the storage battery 110, i.e. the amount of the stored power at the time).

The power generation device 105 such as a fuel cell: is connected to the first load 102 and the second load 103; generates power; supplies the generated power to the first load 102 and the second load 103; and performs a shutdown process for stopping power generation using power supplied from the power storage device 104. The power generation device 105 includes a generator 114 for generating DC power, and a power conditioner 115 including a circuit for converting DC power supplied from the generator 114 into AC power and a circuit for detecting power interruption of the system power supply 101 to disconnect the power generation device 105. When the system power supply 101 is in normal operation, the power generation device 105 supplies power to the first load 102 in addition to power from the system power supply 101, whereas when the power from the system power supply 101 is interrupted, the power generation device 105 supplies power to the second load 103 by operating independently.

The distribution board 106 includes the first switch 116 and a second switch 117, and is connected to the system power supply 101 through the circuit breaker 107. Depending on the state of the system power supply 101, the distribution board 106 switches, between the first load 102 and the second load 103, a destination to which power is supplied from the power storage device 104 and the power generation device 105. It should be noted that the distribution board 106 has a control unit (not shown) for causing the destination to be switched between the first switch 116 and the second switch 117. The first switch 116 is a switch for allowing or interrupting power supply to the first load 102 from the power storage device 105 and the power storage device 104. The second switch 117 is a switch for allowing or interrupting power supply to the second load 103 from the power storage device 105, the power storage device 104, and the system power supply 101.

The determination device 108 is a control device for determining whether or not a remaining amount of power in the power storage device 110, which is detected by the battery power level detection unit 113 in the power storage device 104, is greater than a shutdown power amount which is an amount of power necessary for the power generation device 105 to perform the shutdown process (hereinafter, referred to as the "shutdown power amount") (More specifically, whether or not the remaining amount of power has decreased to the shutdown power amount of the power generation device 105). The determination device 108 includes a processor, a memory, and others.

The dummy load 109 is a load for consuming, when power is being generated by the power generation device 105, the generated power in the interval after the power from the system power supply 101 is interrupted and before power begins to be supplied to the second load 103 from the power generation device 105. This action allows the power generation device 105 to continue to generate power. In the embodiment, the operation mode of the power generation device 105 is changed from interconnected mode to independent mode by closing the second switch 117 after opening the first switch 116 to interrupt the power from the power generation device 105 to the first load 102.

On the other hand, when the power from the system power supply 101 is restored during power generation by the power generation device 105 in the independent mode, the operation mode of the power generation device 105 is changed from the independent mode to the interconnected mode by closing the first switch 116 after opening the second switch 117 to interrupt the power from the power generation device 105 to the second load 103. This allows the power generation device 105 to continue to generate power in the interval before power begins to be supplied to the first load 102 from the power generation device 105.

Here, the power supply system is characterized in that the power generation device 105 performs, while in operation, the shutdown process for stopping the power generation or supplying of power to the power storage device 104 according to the determination by the determination device 108 (in this embodiment, the shutdown process is performed). More specifically, when the determination device 108 determines that the remaining amount of power in the power storage device 104 has decreased to the shutdown power amount, the shutdown process is performed, or when the determination device 108 determines that the remaining amount of power in the power storage device 104 is not greater than the shutdown power amount, power is supplied to the power storage device 104 until the remaining amount of power in the power storage device 104 exceeds the shutdown power amount (in this embodiment, the shutdown process is performed). With this, it is ensured that the power needed to shut down the power generation device 105 is stored in the power storage device 104 at any time, and in case of power interruption or the like, it is possible to prevent the power generation device 105 from being shut down incompletely due to a lack of power supplied from the power storage device 104, thereby avoiding the deterioration of components in the power generation device 105.

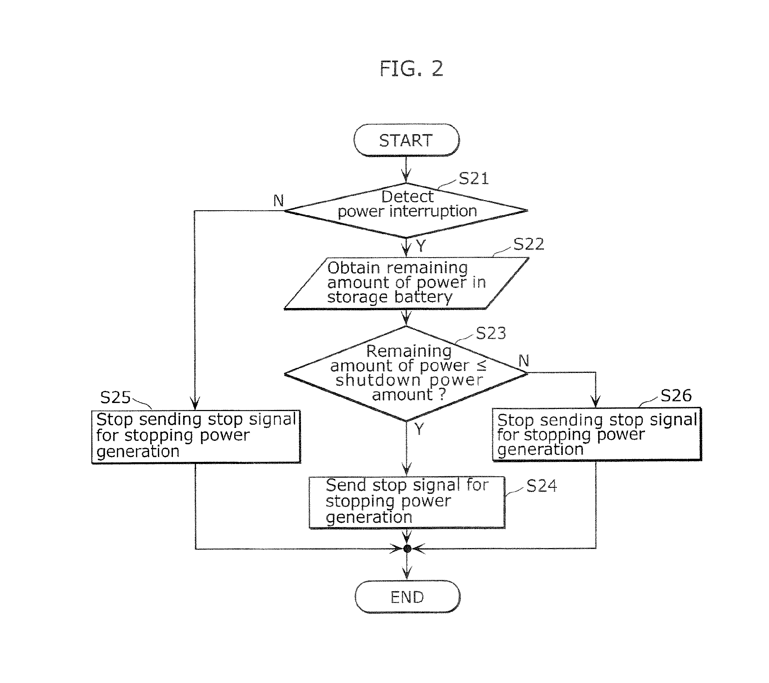

The following describes operation and action of the power supply system with such a configuration according to the embodiment with reference to FIG. 2.

FIG. 2 illustrates a flowchart showing steps of the determination device 108 with respect to the shutdown process of the power supply system according to the embodiment 1.

First, the following describes how the power supply system according to the embodiment operates when the system power supply 101 supplies power.

When the system power supply 101 is in normal operation, the circuit breaker 107 is closed, the first switch 116 is closed, and the second switch 117 is open. In other words, it is possible to supply power to the first load 102 from the system power supply 101, the power storage device 104, and the power generation device 105. It should be noted that the power generation device 105 supplies power to the first load 102 in addition to the power from the system power supply 101, and performs the shutdown process using the power from the system power supply 101.

In this case, when the power consumption of the first load 102 is greater than the power generated by the power generation device 105, all of the power generated by the power generation device 105 is consumed by the fist load 102, whereas when the power consumption of the first load 102 is less than the power generated by the power generation device 105, surplus power is generated and the surplus power attempts to flow into the system power supply 101 (hereinafter, the power flow into the system power supply 101 is referred to as a "reverse power flow").

The power generation device such as a fuel cell system is required to prevent the reverse power flow from the aspects of power cost, safety for the system power supply 101 (for example, increase in AC power caused by the reverse power flow), and others. In view of this, the power storage device 104 obtains information on both the power generated by the power generation device 105 and the power consumption of the first load 102 from the power generation device 105 and a measurement device (not shown), and when the power generated by the power generation device 105 is greater than the power consumption of the first load 102, i.e. when the surplus power is generated, the surplus power is stored in the storage battery 110 through the charge converter 112 to prevent the reverse power flow. On the other hand, when the power consumption of the first load 102 is greater than the power generated by the power generation device 105, the power stored in the storage battery 110 is supplied to the first load 102 through the inverter 111. With this, the power supply system according to the embodiment effectively uses the surplus power generated as a result of the relationship between the power generated by the power generation device 105 and the power consumption of the first load 102.

Next, the following describes how the power supply system according to the embodiment operates when the power from the system power supply 101 is interrupted.

When the power from the system power supply 101 is interrupted, the power interruption is detected in each of the devices (at least one of the power generation device 105, the power storage device 104, the distribution board 106, and the measurement device (not shown)) (Step S21). Upon detecting the power interruption (Y in Step S21), the circuit breaker 107 and the first load 116 are opened to interrupt the power to the first load 102 from the system power supply 101, the power storage device 104, and the power generation device 105. In this manner, the power storage device 104 and the power generation device 105 are disconnected from the system power supply 101. The power storage device 104 changes a control method of the inverter 111 from a current control method to a voltage control method to provide power having a reference voltage waveform with reference to which a frequency and phase of AC power to be converted by the power conditioner 115 in the power generation device 105 are determined. The power generation device 105 also changes the operation mode from the interconnected mode to the independent mode, and when power is being generated by the power generation device 105, the second switch 117 is closed to begin to supply power to the second load 103 from the power storage device 104 and the power generation device 105. It should be noted that when the power interruption is not detected (N in Step S21), the determination device 108 does not send a stop signal to the power generation device 105 (stops sending the stop signal) (Step S25), so that the power generation device 105 operates without any change.

In the changing of the load after interrupting the power from the power generation device 105 to the first load 102 and before supplying power to the second load 103, when power is being generated by the power generation device 105, the power generation device 105 supplies the generated power to the dummy load 109 to continue to generate power. After beginning to supply power from the power generation device 105 to the second load 103, when the power generated by the power generation device 105 is greater than the power consumption of the second load 103, the power storage device 104 stores the surplus power in the storage battery 110 through the charge converter 112, whereas when the power generated by the power generation device 105 is less than the power consumption of the second load 103, the power storage device 104 supplies the power stored in the storage battery 110 to the second load 103 through the inverter 111.

Then when the power generation device 105 is in operation, it is determined whether or not to perform the shutdown process based on the result of the determination by the determination device 108. More specifically, the determination device 108 obtains the remaining amount of power in the storage battery 110 detected by the battery power level detection unit 113 in the power storage device 104 (Step S22), and when it is determined that the remaining amount of power has decreased to the shutdown power amount of the power generation device 105 (the battery power level is not greater than the shutdown power amount) (Y in Step S23), the determination device 108 sends the stop signal to the power generation device 105 (Step S24). Upon receiving the stop signal, the power generation device 105 performs the shutdown process for stopping power generation. On the other hand, when it is determined that the remaining amount of power in the storage battery 110 is greater than the shutdown power amount of the power generation device 105 (N in Step S23), the determination device 108 does not send the stop signal to the power generation device 105 (Step S26). In this manner, the power generation device 105 continues to operate using the power supplied from the power storage device 104. With this, it is ensured that the power generation device 105 performs the shutdown process without being shut down incompletely due to a lack of power from the power storage device.

It should be noted that "the remaining amount of power has decreased to the shutdown power amount" means that the remaining amount of power is less than or equal to the shutdown power amount, and typically means that the remaining amount of power greater than the shutdown power amount falls below the shutdown power amount.

Step S23 corresponds an example of a determination step in the method of controlling the power supply system according to the present invention, i.e. the step of determining whether or not the remaining amount of power in the power storage device 104 is greater than the shutdown power amount which is the amount of power necessary for the power generation device 105 to perform the shutdown process. In addition, Step S24 corresponds an example of the performing in the method of controlling the power supply system according to the present invention, i.e. an example of the step of performing the shutdown process or supplying of power to the power storage device 104 according to the determination in the determining, while the power generation device 105 is in operation (in the embodiment, the shutdown process is performed).

Next, the following describes how the power supply system according to the embodiment operates when the power from the system power supply 101 is restored.

When the power from the system power supply 101 is restored, the power restoration is detected in each of the devices (at least one of the power generation device 105, the power storage device 104, the distribution board 106, and the measurement device (not shown)). Upon detecting the power restoration, the second switch 117 is opened to interrupt the power to the second load 103 from the power storage device 104 and the power generation device 105, and the power storage device 104 changes the control method of the inverter 111 from the current control method to the voltage control method, and also changes the operation mode from the independent mode to the interconnected mode. Subsequently, the circuit breaker 107 and the first switch 116 are closed, and thus power begins to be supplied to the first load 102 from the system power supply 101, the power storage device 104, and the power generation device 105.

Similar to the power interruption of the system power supply 101, during the power restoration, in the changing of the load after interrupting the power from the power generation device 105 to the second load 103 and before supplying power to the first load 102, the power generation device 105 continues to generate power, and the dummy load 109 consumes the generated power when power is being generated by the power generation device 105 (when the power generation device is in operation). After beginning to supply power from the power generation device 105 to the first load 102, when the power generated by the power generation device 105 is greater than the power consumption of the first load 102, the power storage device 104 stores the surplus power in the storage battery 110 through the charge converter 112, whereas when the power generated by the power generation device 105 is less than the power consumption of the first load 102, the power storage device 104 supplies the power stored in the storage battery 110 to the first load 102 through the inverter 111.

It should be noted that in the embodiment, in case of power interruption of the system power supply 101, the second switch 117 is closed when power is being generated by the power generation device 105, but the second switch 117 may be closed immediately after the power interruption of the system power supply 101 to begin to supply power from the power storage device 104 to the second load 103, and then be opened when the determination device 108 determines that the remaining amount of power in the power storage device 104 has decreased to the shutdown power amount of the power generation device 105. With this, when the remaining amount of power in the power storage device 104 is greater than the shutdown power amount of the power generation device 105, power can be supplied soon to the second load 103.

In addition, in the embodiment, the determination device 108 determines whether or not the shutdown process of the power generation device 105 is performed, but the control unit (not shown) in the power generation device 105 may include a determination device to make the decision.

In addition, in the embodiment, in case of power interruption of the system power supply 101, when the determination device 108 determines that the remaining amount of power in the power storage device 104 has decreased to the shutdown power amount of the power generation device 105, the shutdown process is performed without opening the second switch 117, i.e. without disconnecting the second load 103, but the second switch 117 may be opened, i.e. the second load 103 may be disconnected. With this, it is ensured that power is supplied from the power storage device 104 to the power generation device 105 and thus the power generation device 105 can perform the shutdown process completely, before the power from the power storage device 104 is interrupted.

In addition, in the embodiment, the load to which both the power storage device 104 and the power generation device 105 supply power is different between the normal operation and the power interruption of the system power supply 101 (the first load 102 or the second load 103), but a single load may be shared between them (in other words, power may be supplied to the same load in both the normal operation and the power interruption of the system power supply 101).

In addition, in the embodiment, the dummy load 109 consumes power generated by the power generation device 105 during the changing of the load between the first load 102 and the second load 103, but a load unit (not shown) in the power generation device 105 may consume the power generated during the changing of the load.

In addition, in the embodiment, the power interruption and the power restoration of the system power supply 101 are detected by each of the devices (at least one of the power generation device 105, the power storage device 104, the distribution board 106, and the measurement device (not shown)), but a detection unit (not shown) in the power conditioner 115 may detect the power interruption and the power restoration and then a detection signal may be sent to each device.

In addition, in the embodiment, the determination device 108 obtains the remaining amount of power in the power storage device 104, but in addition to this, the determination device 108 may also obtain, from the power generation device 105, an amount of power needed to shut down the power generation device 105 to make the decision based on the amount of power. Moreover, the amount of power needed to shut down the power generation device 105, which is to be obtained, may be fixed or vary depending on the operating status of the power generation device 105.

In addition, in the embodiment, the determination device 108 obtains the remaining amount of power in the power storage device 104 and sends the stop signal to the power generation device 105 according to the result of the determination, but a determination unit (not shown) in the power generation device 105 may perform such functions of the determination device 108.

As described above, in the embodiment, in case of power interruption or the like, when the power generation device 105 is shut down using only the power supplied from the power storage device 104, the shutdown process of the power generation device 105 is performed when the remaining amount of power in the power storage device 104 has decreased to the shutdown power amount of the power generation device 105. Thus, it is possible to prevent the power generation device 105 from being shut down incompletely due to a lack of power supplied from the power storage device 104.

In addition, in the embodiment, when the shutdown process of the power generation device 105 is performed, the second switch 117 interrupts the power from the power storage device 104 to the second load 103, so that it is ensured that power is supplied from the power storage device 104 to the power generation device 105. Thus it is possible to prevent the power generation device 105 from being shut down incompletely due to a lack of power supplied from the power storage device 104.

In addition, in the embodiment, the shutdown process of the power generation device 105 is performed when the determination device 108 determines that the remaining amount of power in the storage battery 110 has decreased to the shutdown power amount of the power generation device 105, but not limited to this. For example, the remaining amount of power in the storage battery 110 may be an amount of power obtained by subtracting an amount of power to prevent over-discharge of the storage battery 110 from an amount of power stored in the storage battery 110. In this case, the shutdown process of the power generation device 105 may be performed when it is determined that the new remaining amount of power in the storage battery 110 has decreased to the shutdown power amount of the power generation device 105. In this manner, even when the shutdown process of the power generation device 105 is performed using the power from the power storage device 104, the storage battery 110 holds the amount of power to prevent the over-discharge. Thus, in the shutdown process of the power generation device 105, the deterioration of the storage battery 110 caused by the over-discharge can be reduced by replacing the remaining amount of power with the new remaining amount of power which is the amount of power obtained by subtracting the amount of power to prevent the over-discharge from the amount of power stored in the storage battery 110.

In addition, in the embodiment, when the power generation device 105 includes a fuel cell, the shutdown power amount of the power generation device 105 may be determined from a temperature of a reformer in the power generation device 105. For example, the determination device 108 holds in advance a table defining a relationship between the temperature of the reformer in the power generation device 105 and the shutdown power amount, and may reference the table to determine the shutdown power amount corresponding to the temperature of the reformer at the time of determination. This method can take into account the amount of power necessary for a pressure applying step and a cooling step of the reformer, which is required in the shutdown process of the fuel cell, and thus be useful to prevent the power generation device 105 from being shut down incompletely due to a lack of power supplied from the power storage device 104.

### (Embodiment 2)

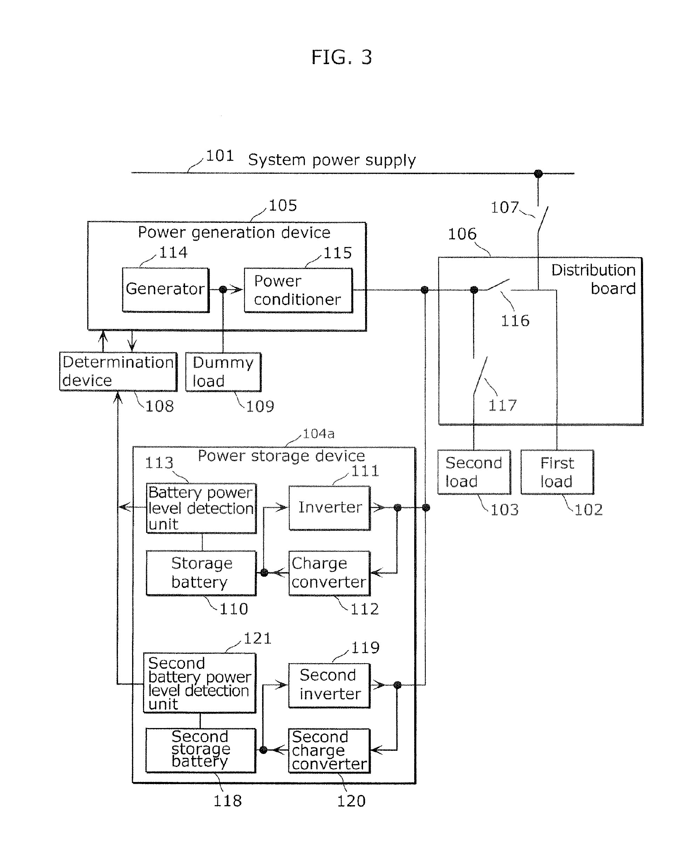

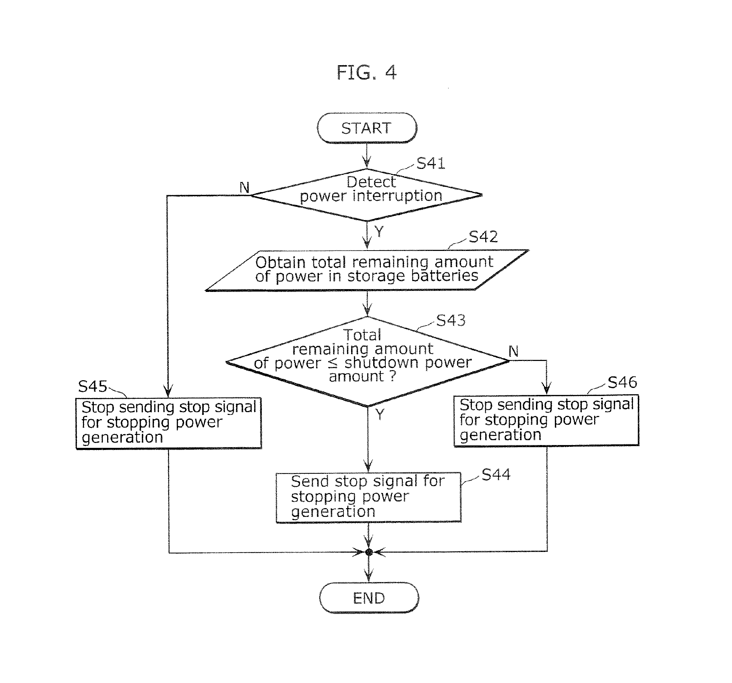

The following describes a power supply system according to an embodiment 2 of the present invention with reference to FIG. 3 and FIG.4. It should be noted that the corresponding constituent elements in the embodiment 2 are numbered the same as those in the embodiment 1, and the descriptions are omitted.

FIG. 3 illustrates a block diagram showing the power supply system according to the embodiment 2 of the present invention. In addition to the constituent elements included in the power supply system according to the embodiment 1 shown in FIG. 1, the power supply system according to the embodiment 2 includes, in a power storage device 104a, a second storage battery 118, a second inverter 119 which supplies power from the second storage battery 118, a second charge converter 120 for charging the second storage battery 118, and a second battery power level detection unit 121 which detects the remaining amount of power in the second storage battery 118. FIG. 4 illustrates a flowchart showing steps of the determination device 108 with respect to the shutdown process of the power supply system according to the embodiment 2.

When the system power supply 101 is in normal operation, the process in the embodiment 2 is the same as that in the embodiment 1, and thus the description is omitted. The following describes how the power supply system operates when the power from the system power supply 101 is interrupted.

When the power from the system power supply 101 is interrupted, the power interruption is detected in each of the devices (at least one of the power generation device 105, the power storage device 104a, the distribution board 106, and the measurement device (not shown)) (Step S41). Upon detecting the power interruption, the circuit breaker 107 and the first load 116 are opened to interrupt the power to the first load 102 from the system power supply 101, the power storage device 104a, and the power generation device 105, and the power storage device 104a and the power generation device 105 are disconnected from the system power supply 101. The power storage device 104a changes a control method of the inverter 111 from a current control method to a voltage control method to provide power having a reference voltage waveform with reference to which a frequency and phase of AC power to be supplied from the power conditioner 115 in the power generation device 105 are determined. The power generation device 105 also changes the operation mode from the interconnected mode to the independent mode, and when power is being generated by the power generation device 105, the second switch 117 is closed to begin to supply power to the second load 103 from the power storage device 104a and the power generation device 105.

In the changing of the load after interrupting the power from the power generation device 105 to the first load 102 and before supplying power to the second load 103, when power is being generated by the power generation device 105, the power generation device 105 supplies the generated power to the dummy load 109 to continue to generate power. After beginning to supply power from the power generation device 105 to the second load 103, the determination device 108 monitors the amount of power in the power storage device 104a. When the power generated by the power generation device 105 is greater than the power consumption of the second load 103, the surplus power is charged in the storage battery 110 and the second storage battery 118 through the charge converter 112 and the second charge converter 120, respectively. When the power generated by the power generation device 105 is less than the power consumption of the second load 103, the power stored in the storage battery 110 and the second storage battery 118 is supplied to the second load 103 through the inverter 111 and the second inverter 119, respectively.

Then when the power generation device 105 is in operation, it is determined whether or not to perform the shutdown process based on the result of the determination by the determination device 108. More specifically, the determination device 108 obtains a total remaining amount of power that is a sum of (i) the remaining amount of power in the storage battery 110 detected by the battery power level detection unit 113 in the power storage device 104a and (ii) the remaining amount of power in the second storage battery 118 detected by the second battery power level detection unit 121 (Step S42), and when it is determined that the total remaining amount of power has decreased to the shutdown power amount of the power generation device 105 (Y in Step S43), the determination device 108 sends a stop signal to the power generation device 105 (Step S44). Upon receiving the stop signal, the power generation device 105 performs the shutdown process. On the other hand, when it is determined that the total remaining amount of power that is the sum of the remaining amount of power in the storage battery 110 and the remaining amount of power in the second storage battery 118 is greater than the shutdown power amount of the power generation device 105 (N in Step S43), the determination device 108 does not send the stop signal to the power generation device 105 (i.e. stops sending the stop signal; Step S46). In this manner, the power generation device 105 continues to operate using the power supplied from the power storage device 104a. With this, it is ensured that the power generation device 105 performs the shutdown process without being shut down incompletely due to a lack of power from the power storage device.

It should be noted that when the power interruption is not detected (N in Step S41), the determination device 108 does not send the stop signal to the power generation device 105 (stops sending the stop signal) (Step S45), so that the power generation device 105 operates without any change.

Step S43 corresponds an example of a determination step in the method of controlling the power supply system according to the present invention, i.e. the step of determining whether or not the remaining amount of power in the power storage device 104a is greater than the shutdown power amount which is the amount of power necessary for the power generation device 105 to perform the shutdown process. In addition, Step S44 corresponds an example of the performing in the method of controlling the power supply system according to the present invention, i.e. an example of the step of performing the shutdown process or supplying of power to the power storage device 104a according to the determination in the determining, while the power generation device 105 is in operation (in the embodiment, the shutdown process is performed).

Next, the following describes how the power supply system according to the embodiment operates when the power from the system power supply 101 is restored.

When the power from the system power supply 101 is restored, the power restoration is detected in each of the devices (at least one of the power generation device 105, the power storage device 104a, the distribution board 106, and the measurement device (not shown)). Upon detecting the power restoration, the second switch 117 is opened to interrupt the power to the second load 103 from the power storage device 104a and the power generation device 105, and the power storage device 104a changes the control method of the inverter 111 from the current control method to the voltage control method, and also changes the operation mode from the independent mode to the interconnected mode. Subsequently, the circuit breaker 107 and the first switch 116 are closed, and thus power begins to be supplied to the first load 102 from the system power supply 101, the power storage device 104a, and the power generation device 105.

Similar to the power interruption of the system power supply 101, during the power restoration, in the changing of the load after interrupting the power from the power generation device 105 to the second load 103 and before supplying power to the first load 102, the power generation device 105 supplies the generated power to the dummy load 109 to continue to generate power when power is being generated by the power generation device 105. After beginning to supply power from the power generation device 105 to the first load 102, when the power generated by the power generation device 105 is greater than the power consumption of the first load 102, the surplus power is charged in the storage battery 110 and the second storage battery 118 through the charge converter 112 and the second charge converter 120, respectively, and whereas when the power generated by the power generation device 105 is less than the power consumption of the first load 102, the power stored in the storage battery 110 and the second storage battery 118 is supplied to the first load 102 through the inverter 111 and the second inverter 119, respectively.

As described above, in the embodiment, when the power generation device 105 performs the shutdown process using the power supplied from the storage batteries, the shutdown process of the power generation device 105 is performed when the total remaining amount of power in the storage batteries has decreased to the shutdown power amount of the power generation device 105. Thus it is possible to prevent the power generation device 105 from being shut down incompletely due to a lack of power supplied from the power storage device 104a.

In addition, in the embodiment, the shutdown process of the power generation device 105 is performed when the determination device 108 determines that the sum of the remaining amount of power in the storage battery 110 and the remaining amount of power in the second storage battery 118 has decreased to the shutdown power amount of the power generation device 105, but not limited to this. For example, the remaining amount of power in the storage battery 110 may be an amount of power obtained by subtracting an amount of power to prevent over-discharge of the storage battery 110 from an amount of power stored in the storage battery 110, and the remaining amount of power in the second storage battery 118 may be an amount of power obtained by subtracting an amount of power to prevent over-discharge of the second storage battery 118 from an amount of power stored in the second storage battery 118. In this case, the shutdown process of the power generation device 105 may be performed when it is determined that the sum of the remaining amount of power in the storage battery 110 and the remaining amount of power in the second storage battery 118 has decreased to the shutdown power amount of the power generation device 105. In this manner, even when the shutdown process of the power generation device 105 is performed using the power from the power storage device 104a, each of the storage battery 110 and the second storage battery 118 holds the amount of power to prevent the over-discharge. Therefore, the deterioration of the storage battery 110 and the second storage battery 118 caused by the over-discharge can be reduced.

### (Embodiment 3)

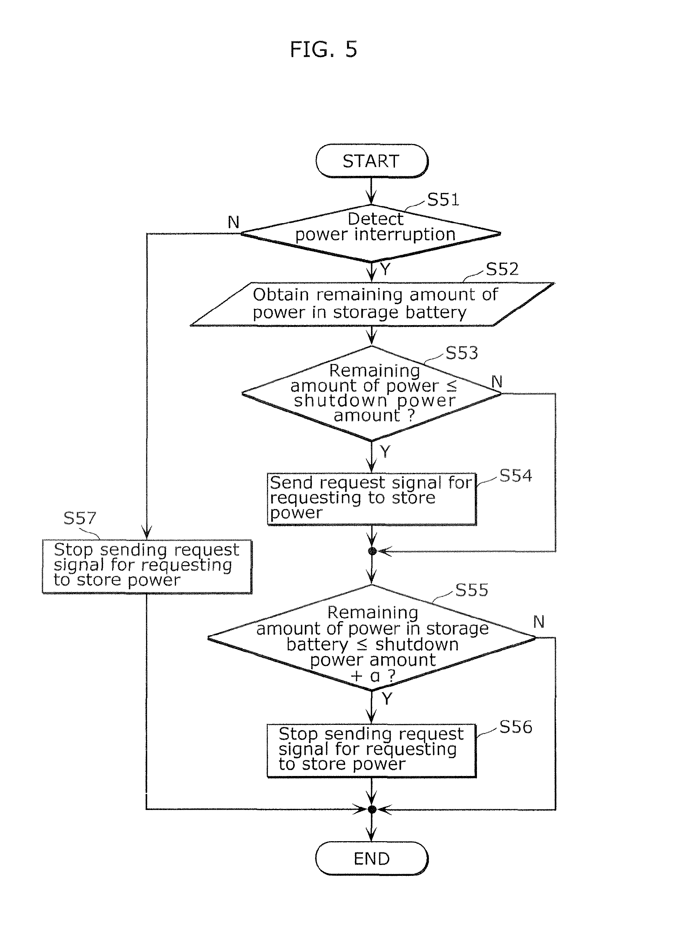

The following describes a power supply system according to an embodiment 3 of the present invention with reference to FIG. 5. It should be noted that the constituent elements of the power supply system according to the embodiment 3 are the same as those in the embodiments 1 and 2. However, the power supply system according to the embodiment 3 operates differently from the embodiments 1 and 2. For this reason, the constituent elements of the power supply system according to the embodiment 3 are numbered the same as those in the embodiments 1 and 2, and the descriptions are omitted.

In the embodiment 3, a power generation device 105 supplies power to a power storage device 104 (104a) according to a determination by a determination device 108. More specifically, when the determination device 108 determines that a remaining amount of power in the power storage device 104 (104a) is not greater than a shutdown power amount, the power generation device 105 supplies power to the power storage device 104 (104a) until the remaining amount of power in the power storage device 104 (104a) exceeds the shutdown power amount. With this, it is ensured that the power needed to shut down the power generation device 105 is stored in the power storage device 104 (104a) at any time. Accordingly, in case of power interruption or the like, it is possible to prevent the power generation device 105 from being shut down incompletely due to a lack of power supplied from the power storage device 104 (104a), thereby avoiding the deterioration of components in the power generation device 105.

FIG. 5 illustrates a flowchart showing steps of the determination device 108 with respect to a power storing process of the power supply system according to the embodiment 3.

When the system power supply 101 is in normal operation or when the power from the system power supply 101 is restored, the steps in the embodiment 3 are the same as those in the embodiments 1 and 2, and thus the descriptions are omitted. The following describes how the power supply system 101 operates when the power from the system power supply 101 is interrupted.

When the power from the system power supply 101 is interrupted, the power interruption is detected in each of the devices (Step S51). Upon detecting the power interruption, the circuit breaker 107 and the first load 116 are opened to interrupt the power to the first load 102 from the system power supply 101, the power storage device 104 (104a), and the power generation device 105, and the power storage device 104 (104a) and the power generation device 105 are disconnected from the system power supply 101. The power storage device 104 (104a) changes a control method of the inverter 111 from a current control method to a voltage control method to provide power having a reference voltage waveform with reference to which a frequency and phase of AC power to be converted by the power conditioner 115 in the power generation device 105 are determined. The power generation device 105 also changes the operation mode from the interconnected mode to the independent mode, and when power is being generated by the power generation device 105, the second switch 117 is closed to begin to supply power to the second load 103 from the power storage device 104 (104a) and the power generation device 105.

In the changing of the load after interrupting the power from the power generation device 105 to the first load 102 and before supplying power to the second load 103, when power is being generated by the power generation device 105, the power generation device 105 supplies the generated power to the dummy load 109 to continue to generate power. After beginning to supply power from the power generation device 105 to the second load 103, when the power generated by the power generation device 105 is greater than the power consumption of the second load 103, the power storage device 104 (104a) stores the surplus power in the storage battery 110 (and the second storage battery 118) through the charge converter 112 (and the second charge converter 120, respectively), whereas when the power generated by the power generation device 105 is less than the power consumption of the second load 103, the power storage device 104 (104a) supplies the power stored in the storage battery 110 (and the second storage battery 118) to the second load 103 through the inverter 111 (and the second inverter 119, respectively).

Then when the power is being generated by the power generation device 105, it is determined whether or not to store the generated power in the power storage device 104 (104a) based on the result of the determination by the determination device 108. More specifically, the determination device 108 obtains the remaining amount of power in the storage battery 110 detected by the battery power level detection unit 113 in the power storage device 104 (104a) (Step S52), and when it is determined that the remaining amount of power has decreased to the shutdown power amount of the power generation device 105 (i.e. the remaining amount of power is not greater than the shutdown power amount) (Y in Step S53), the determination device 108 sends, to the power generation device 105, a request signal for requesting to store the generated power in the power storage device (Step S54). Upon receiving the request signal, the power generation device 105 stores the generated power in the power storage device 104 (104a). On the other hand, when it is not determined that the remaining amount of power has decreased to the shutdown power amount (N in Step S53), the request signal is not sent.

Subsequently, when it is determined that the remaining amount of power in the storage battery 110 increases to a sum of the shutdown power amount of the power generation device 105 and a little extra (the little extra is a predetermined amount of power) (Y in Step S55), the determination device 108 sends, to the power generation device 105, a storage stop signal for stopping storing the generated power in the power storage device 104 (104a) (i.e. stops sending the request signal) (Step S56). Upon receiving the storage stop signal, the power generation device 105 stops storing the generated power in the power storage device 104 (104a). On the other hand, when it is not determined that the remaining amount of power increases to the sum of the shutdown power amount and the little extra (N in Step S55), the storage stop signal is not sent.

With this, at any time during power generation in the power generation device 105, the remaining amount of power in the power storage device 104 (104a) is greater than the shutdown power amount, so that the power generation device can continue to generate power while keeping the remaining amount of power in the power storage device 104 (104a) so as to be able to perform the shutdown process completely.

It should be noted that when the power interruption is not detected (N in Step S51), the determination device 108 does not send the request signal to the power generation device 105 (stops sending the request signal; Step S57).

Step S53 corresponds an example of a determination step in the method of controlling the power supply system according to the present invention, i.e. the step of determining whether or not the remaining amount of power in the power storage device 104 (104a) is greater than the shutdown power amount which is the amount of power necessary for the power generation device 105 to perform the shutdown process. In addition, a set of Steps S54 to S56 corresponds an example of the performing in the method of controlling the power supply system according to the present invention, i.e. an example of the step of performing the shutdown process or supplying of power to the power storage device 104 (104a) according to the determination in the determining, while the power generation device 105 is in operation (in the embodiment, power is supplied from the power generation device to the power storage device).

In this manner, according to the embodiment, when the determination device 108 determines that the remaining amount of power in the power storage device 104 (104a) has decreased to the amount of power needed to shut down the power generation device 105, the power generation device 105 supplies power to the power storage device 104 (104a) until the remaining amount of power in the power storage device exceeds the amount of power needed to shut down. With this, at any time during power generation in the power generation device 105, the remaining amount of power in the power storage device 104 (104a) is greater than the amount of power needed to shut down, so that the power generation device 105 can continue to generate power while keeping the remaining amount of power in the power storage device so as to be able to perform the shutdown process completely.

Thus, the power supply system according to the present invention has been described based on the embodiments, but the present invention is not limited to these embodiments. Various modifications to the embodiments that can be conceived by those skilled in the art, and forms configured by combining constituent elements in different embodiments without departing from the teachings of the present invention may be included in the scope of the present invention.

For example, in the embodiment 3, when the determination device 108 determines that the remaining amount of power in the power storage device 104 (104a) has decreased to the shutdown power amount of the power generation device 105, the power generation device 105 supplies power to the power storage device 104 (104a) until the remaining amount of power in the power storage device 104 (104a) exceeds the shutdown power amount, but not limited to this. As an example, each of the first load 102 and the second load 103 comprises a plurality of sub loads (not shown) each including a switch (not shown) and a measurement device for measuring the power of the sub load (not shown). During power generation in the power generation device 105, when the determination device 108 determines that the remaining amount of power in the power storage device 104 (104a) is less than the shutdown power amount of the power generation device 105, each switch may interrupt the power supplied to each sub load from the power generation device 105 such that the total load amount of the sub loads is less than the amount of power generated by the power generation device 105, and then the power generation device 105 may supply power to the power storage device 104 (104a) until the remaining amount of power in the power storage device 104 (104a) exceeds the shutdown power amount of the power generation device 105. With this, it is possible to minimize the amount of interrupted power of the first load 102 or the second load 103.

In addition, in the embodiment, the determination device 108 obtains only the remaining amount of power in the power storage device 104 (104a), but the determination device 108 may obtain, from the power generation device 105, the amount of power needed to shut down the power generation device 105 and the sum of the amount of power needed to shut down the power generation device 105 and a little extra.

Moreover, the amount of power needed to shut down the power generation device 105 and the sum of the amount of power needed to shut down the power generation device 105 and a little extra, which are to be obtained, may be fixed or vary depending on the operating status of the power generation device 105 (variable value).

In addition, in the embodiment, the determination device 108 obtains the remaining amount of power in the power storage device 104 (104a) and sends, to the power generation device 105, the request signal for requesting to store the generated power in the power storage device, but a determination unit (now shown) in the power generation device 105 may perform these steps.

In addition, in each of the above embodiments, each constituent element may be implemented as a dedicated hardware or by executing a software program appropriate to the constituent element. The constituent element also may be implemented by causing a program execution unit, such as a CPU or a processor, to retrieve the software program recorded on a recording medium, such as a hard disk or a semiconductor memory, and execute the retrieved software program. Here, the software for implementing the method of controlling the power supply system is the following program.

The program causes a computer to execute the following control method. The control method is a method of controlling a power supply system which includes: a power storage device 104 (104a) which is connected to a system power supply and is chargeable and dischargeable; a load (102, 103) which is connected in parallel to the power storage device 104 (104a); and a power generation device 105 which is connected to the load, generates power, supplies the generated power to the load, and performs a shutdown process for stopping power generation using power supplied from the power storage device 104 (104a), the method including: determining whether or not a remaining amount of power in the power storage device 104 (104a) is greater than a shutdown power amount which is an amount of power necessary for the power generation device 105 to perform the shutdown process, and performing the shutdown process or supplying of power to the power storage device 104 (104a) according to the determination in the determining, while the power generation device 105 is in operation.

More specifically, in the performing, the shutdown process is performed by the power generation device 105 when it is determined in the determining that the remaining amount of power in the power storage device 104 (104a) has decreased to the shutdown power amount, and the supplying of power to the power storage device 104 (104a) is performed by the power generation device 105 until the remaining amount of power in the power storage device 104 (104a) exceeds the shutdown power amount when it is determined in the determining that the remaining amount of power in the power storage device 104 (104a) is not greater than the shutdown power amount.

With this, at any time during power generation in the power generation device 105, the remaining amount of power in the power storage device 104 (104a) is greater than the amount of power needed to shut down, so that the power generation device 105 can continue to generate power while keeping the remaining amount of power in the power storage device 104 (104a) so as to be able to perform the shutdown process completely.

### [Industrial Applicability]

As described above, in a power supply system according to the present invention, in order to allow a power generation device to be shut down using power supplied from a power storage device, a shutdown process of the power generation device is performed when a remaining amount of power in the power storage device has decreased to a shutdown power amount of the power generation device. In addition, the power generated by the power generation device is stored in the power storage device, thereby keeping the remaining amount of power in the power storage device at any time so as to be able to perform the shutdown process completely. With this, it is possible to prevent the power generation device from being shut down incompletely due to a lack of power supplied from the power storage device. Therefore, the power supply system according to the present invention is applicable to a power supply system or the like which include a fuel cell power generation device, gas engine power generation device, or the like.

### [Reference Signs List]

- 101: System power supply
- 102: First load
- 103: Second load
- 104, 104a: Power storage device
- 105: Power generation device
- 106: Distribution board
- 107: Circuit breaker
- 108: Determination device
- 109: Dummy load
- 110: Storage battery
- 111: Inverter
- 112: Charge converter
- 113: Battery power level detection unit
- 114: Generator
- 115: Power conditioner
- 116: First switch
- 117: Second switch
- 118: Second storage battery
- 119: Second inverter
- 120: Second charge converter
- 121: Second battery power level detection unit

## Claims

1. A power supply system comprising:
a power storage device which is connected to a system power supply and is chargeable and dischargeable;
a load which is connected in parallel to the power storage device;
a power generation device which is connected to the load, generates power, supplies the generated power to the load, and performs a shutdown process for stopping power generation using power supplied from the power storage device; and
a determination device which determines whether or not a remaining amount of power in the power storage device is greater than a shutdown power amount which is an amount of power necessary for the power generation device to perform the shutdown process,
wherein the power generation device performs, while in operation, the shutdown process or supplying of power to the power storage device according to the determination by the determination device.

2. The power supply system according to Claim 1,
wherein the determination device determines, in the determination, whether or not the remaining amount of power in the power storage device has decreased to the shutdown power amount,
and
when the determination device determines that the remaining amount of power in the power storage device has decreased to the shutdown power amount, the power generation device performs the shutdown process while in operation.

3. The power supply system according to Claim 2, further comprising
a switch which allows or interrupts power supply from the power storage device to the load,
wherein, when the power generation device performs the shutdown process, the switch interrupts the power supply from the power storage device to the load.

4. The power supply system according to one of Claim 2 and Claim 3,
wherein the power storage device includes a plurality of storage batteries, and
when the determination device determines that a total remaining amount of power in the storage batteries has decreased to the shutdown power amount, the power generation device performs the shutdown process.

5. The power supply system according to Claim 1,
wherein, when the determination device determines that the remaining amount of power in the power storage device is not greater than the shutdown power amount during power generation in the power generation device, the power generation device supplies power to the power storage device until the remaining amount of power in the power storage device exceeds the shutdown power amount.

6. The power supply system according to Claim 5, further comprising
a switch which allows or interrupts power supply from the power storage device to the load,
wherein, when the power generation device performs the shutdown process, the switch interrupts the power supply from the power storage device to the load.

7. The power supply system according to one of Claim 5 and Claim 6,
wherein the power storage device includes a plurality of storage batteries, and
when the determination device determines that a total remaining amount of power in the storage batteries is not greater than the shutdown power amount, the power generation device supplies power to the power storage device until the remaining amount of power in the power storage device exceeds the shutdown power amount.

8. The power supply system according to any one of Claims 1 to 7,
wherein the remaining amount of power is an amount of power obtained by subtracting an amount of power to prevent over-discharge of the power storage device from an amount of power stored in the power storage device.

9. The power supply system according to any one of Claims 1 to 8,
wherein, when the power generation device includes a fuel cell, the shutdown power amount is determined from a temperature of a reformer in the fuel cell.

10. A method of controlling a power supply system which includes: a power storage device which is connected to a system power supply and is chargeable and dischargeable; a load which is connected in parallel to the power storage device; and a power generation device which is connected to the load, generates power, supplies the generated power to the load, and performs a shutdown process for stopping power generation using power supplied from the power storage device, the method comprising :
determining whether or not a remaining amount of power in the power storage device is greater than a shutdown power amount which is an amount of power necessary for the power generation device to perform the shutdown process, and
performing the shutdown process or supplying of power to the power storage device according to the determination in the determining, while the power generation device is in operation.

11. The method according to Claim 10,
wherein in the performing, the shutdown process is performed by the power generation device when it is determined in the determining that the remaining amount of power in the power storage device has decreased to the shutdown power amount, and the supplying of power to the power storage device is performed by the power generation device until the remaining amount of power in the power storage device exceeds the shutdown power amount when it is determined in the determining that the remaining amount of power in the power storage device is not greater than the shutdown power amount.
